# EUROPÄISCHE PATENTSCHRIFT

(11) **EP 3 060 381 B1**
(45) Veröffentlichungstag und Bekanntmachung des Hinweises auf die Patenterteilung: **11.03.2020**
(21) Anmeldenummer: 14786946.5
(22) Anmeldetag: 23.10.2014
(51) Int. Cl.: B29C 70/24, B29L 31/08, B29L 31/30, D05B 93/00, B29K 105/04

(54) **WIEDERHOLUNGSEINHEIT, VIELNADELMASCHINE UND VERFAHREN ZUR HERSTELLUNG VON VERSTÄRKTEN MATERIALIEN**
REPEATING UNIT, MULTI-NEEDLE MACHINE, AND A METHOD FOR PRODUCING REINFORCED MATERIALS
UNITÉ DE RÉPÉTITION, MACHINE MULTI-AIGUILLES ET PROCÉDÉ DE PRODUCTION DE MATÉRIAUX RENFORCÉS

(30) Priorität: 25.10.2013 DE 102013111794
(43) Veröffentlichungstag der Anmeldung: 31.08.2016
(73) Patentinhaber: Airbus Defence and Space GmbH, 85521 Ottobrunn (DE); Airbus Operations GmbH, 21129 Hamburg (DE)
(72) Erfinder: ENDRES, Gregor Christian, 85276 Pfaffenhofen (DE); WEBER, Hans-Jürgen, 21129 Hamburg (DE)
(74) Vertreter: LKGLOBAL Lorenz & Kopf PartG mbB Patentanwälte
(86) Internationale Anmeldenummer: PCT/EP2014/072716
(87) Internationale Veröffentlichungsnummer: WO 2015/059218

(56) Entgegenhaltungen:
- US-A- 3 033 139
- US-A1- 2010 263 504

## Beschreibung

### Technisches Gebiet

Die Erfindung betrifft die Herstellung von verstärkten Materialien. Insbesondere betrifft die Erfindung eine Wiederholungseinheit für eine Vorlagevorrichtung einer Vielnadelmaschine zum Anordnen eines textilen Halbzeugs, beispielsweise eine Faser, ein Faden oder ein Roying, eine Vielnadelmaschine zur Herstellung verstärkter Schaumstoffe, verstärkter Textilien oder Kombinationen hiervon, die Verwendung einer Vielnadelmaschine zur Herstellung verstärkter Schaumstoffe, verstärkter Textilien oder Kombinationen hiervon, die Verwendung einer Vielnadelmaschine zur Herstellung eines Strukturbauteils für ein Fahrzeug, die Verwendung einer Vielnadelmaschine zur Herstellung eines Flügels eines Windkraftwerks und ein Verfahren zur Herstellung verstärkter Schaumstoffe, verstärkter Textilien oder Kombinationen hiervon.

### Hintergrund

Aufgrund des guten Verhältnisses von Steifigkeit und Festigkeit zur Dichte finden im Bereich des Flugzeugbaus Verbundwerkstoffe und insbesondere Sandwichbauteile einen breiten Anwendungsbereich. Solche Verbundwerkstoffe, beispielsweise Kernstruktur-Textilwerkstoffe oder andere Kernverbunde, werden im Allgemeinen aus einer oberen und einer unteren Deckschicht oder Decklage gebildet, zwischen denen sich zur Erhöhung der Steifigkeit eine aus vertikal verlaufenden Zellen mit hexagonalem Querschnitt gebildete wabenartige Kernstruktur befinden kann. Schaumstoffe sind insbesondere bei der Bauteilherstellung sowie im Bereich der erweiterten Bauteileigenschaften aufgrund ihrer Multifunktionalität für die Anwendung in Kernverbunden für großformatige Strukturbauteile, z.B. im Bereich der Luftfahrt, von Interesse. Zur Verstärkung der schaumbasierten Kernverbunde werden Nähtechniken eingesetzt, mit denen Fasern oder Fäden, im Folgenden textile Halbzeuge genannt, in Hartschaumbauteile eingebracht werden können. Nach einem Harzinfiltrationsprozess tragen die mit Fasern durchsetzten Bereiche dann zur mechanischen Verstärkung des Schaumstoffs bei.

Bei den zur Verstärkung eingebrachten Fasern oder Fäden kann es sich um sog. Rovings handeln, welche aus parallel verlaufenden Fasern bestehen. Auch kann es sich um Fäden handeln, die aus verdrillten oder verzwirnten Fasern bestehen.

Bei bekannten Nähverfahren dringt zunächst eine Nadel in den Schaumstoff ein und durchsticht diesen. Gleichzeitig bringt die Nadel den Faden in den Schaumstoff ein. Hierbei erstreckt sich während des Einsteckens in den Schaumstoff der Faden parallel zu und im Wesentlichen über die ganze Länge der Nadel. Die Lochgröße des Einstichloches wird somit durch den Nadeldurchmesser und die Stärke des Fadens bestimmt.

Nach dem Rückzug der Nadel aus dem Schaumstoff oder Textil verbleibt ein Loch, dessen Durchmesser im Vergleich zum Durchmesser des eingebrachten Fadens verhältnismäßig groß ist. Dies führt dazu, dass nach der Infiltration mit einem Harz der nicht mit Fasern ausgefüllte Lochbereich mit Harz gefüllt ist, was zu erhöhtem Gewicht des fertigen Bauteils führen kann.

DE 10 2005 024 408 A1 beschreibt die Verstärkung von Schaumwerkstoffen mittels eines Knüpfverfahrens, bei dem zunächst die Nadel das zu verstärkende Material (den Schaumwerkstoff) durchsticht und erst dann, im Bereich der Unterseite des Schaumwerkstoffes, das textile Halbzeug aufnimmt und bei der folgenden Rückwärtsbewegung durch das gestochene Loch zieht.

US 3 033 139 A beschreibt ein Maschenbildungsverfahren zum Zickzack-Nähen für eine Steppstich-Nähmaschine. Bei diesem Verfahren werden ein Näh- und ein Spulenfaden vernäht, wobei die Nähmaschine derart ausgestaltet ist, dass sowohl die Nadel als auch das Schiffchen um jeweils eine Achse rotierbar gelagert sind. Als ein Resultat dieses Nähverfahrens ist der vernähte Näh- oder Spulenfaden entlang einer periodisch verlaufenden, ungeraden Bahn im rückseitigen Bereich einer Oberfläche angeordnet.

US 2010/263504 A1 beschreibt eine Vorrichtung zur Herstellung eines verstärkten Schaumwerkstoffs und zur Aufnahme eines textilen Halbzeugs in einem Haken.

Auf diese Weise kann der Lochdurchmesser insgesamt verhältnismäßig klein gehalten werden.

### Zusammenfassung der Erfindung

Es ist eine Aufgabe der Erfindung, die Produktion von verstärkten, großformatigen Materialien mit gekrümmten Oberflächen mit hoher Geschwindigkeit zu ermöglichen.

Die Aufgabe wird durch die Merkmale der unabhängigen Patentansprüche gelöst, Weiterbildungen der Erfindung ergeben sich aus den Unteransprüchen und der folgenden Beschreibung.

Gemäß einem ersten Aspekt der Erfindung ist eine Wiederholungseinheit für eine Vorlagevorrichtung einer Vielnadelmaschine angegeben. Die Wiederholungseinheit dient, ggf. in Kombination mit weiteren Wiederholungseinheiten, dem Anordnen eines textilen Halbzeugs entlang einer periodisch verlaufenden, ungeraden Bahn im Bereich einer rückseitigen Oberfläche des zu verstärkenden Materials.

Bei den zu verstärkenden Materialien handelt es sich beispielsweise um Schaumwerkstoffe oder andere, als Kernmaterial von Kernverbunden geeignete Materialien. Alternativ zu Schaumwerkstoffen kommen auch Textilien, wie beispielsweise Filze, andere Fasergelege oder Gummiwerkstoffe in Betracht. Die zur Verstärkung der Materialien verwendeten textilen Halbzeuge können Faserbündel in Form von Rovings aus einer Vielzahl von Einzelfasern oder Monofilamenten, Einzelfasern selbst sowie Fäden, die durch Verzwirnung von Einzelfasern oder Faserbündeln entstanden sind, sein.

"Anordnen eines textilen Halbzeugs entlang einer periodisch verlaufenden, ungeraden Bahn im Bereich einer rückseitigen Oberfläche des zu verstärkenden Materials" kann bedeuten, dass das textile Halbzeug nahe der rückseitigen Oberfläche des zu verstärkenden Materials wellen-, zickzack- oder trapezförmig angeordnet wird, so dass es darauf folgend von den Nadeln aufgenommen werden kann.

Um dies zu erreichen, sind zwei Vorrichtungen vorgesehen. An der ersten Vorrichtung ist zumindest ein Schieber (oder alternativ ein Pin) und an der zweiten Vorrichtung ist zumindest ein Pin angebracht. Beispielsweise sind an der zweiten Vorrichtung zwei Pins angebracht.

Es sei angemerkt, dass im Folgenden in Zusammenhang mit der ersten Vorrichtung stets von "Schieber" gesprochen wird; jedoch ist nicht ausgeschlossen, dass der Schieber starr an der ersten Vorrichtung angeordnet ist und dieselbe Bauweise aufweist, wie das Pin der zweiten Vorrichtung.

Zumindest eine der beiden Vorrichtungen (also die erste Vorrichtung oder die zweite Vorrichtung) ist um eine Drehachse rotierbar gelagert. Eine Rotation der rotierbar gelagerten Vorrichtung bewirkt somit, dass sich der Schieber oder der/die Pin(s) entlang einer Kreisbahn bewegt/bewegen und sich somit auf das entsprechende Gegenstück (der/die Pin(s) bzw. den Schieber) zubewegt/zubewegen und dann daran vorbei.

Insbesondere kann vorgesehen sein, dass beide Vorrichtungen um eine gemeinsame Drehachse rotierbar gelagert sind. Auch kann vorgesehen sein, dass beide Vorrichtungen um jeweils eine eigene Drehachse rotierbar gelagert sind, wobei die beiden Drehachsen im Wesentlichen parallel zueinander ausgerichtet sind.

Diese Relativbewegung zwischen Schieber und Pin(s) ermöglicht es, dass das textile Halbzeug von einer gerade verlaufenden, linearen Anordnung in die periodisch verlaufende, ungerade Anordnung überführt wird, da es von dem Schieber und dem Pin aufgenommen und verschoben wird.

Aufgrund der Rotation von Schieber und/oder Pin auf einer Kreisbahn ist es insbesondere möglich, gekrümmte oder gar zylinderförmige Oberflächen zu verstärken. Insbesondere kann die Wiederholungseinheit in den Zylinder eines zylinderförmigen, zu verstärkenden Materials eingeschoben werden.

Bei den zu verstärkenden Materialien kann es sich um Sandwichbauteile handeln, welche neben einem Kernmaterial ein oder mehrere Zwischen- und/oder Deckschichten aufweisen.

Auf diese Weise können Kernverbundbauteile hergestellt werden, bei denen es sich um flächige Bauteile mit zweieckigen überliegenden Oberflächen und im einfachsten Fall mit zwei gegenüberliegenden, parallelen Oberflächen handeln kann. Häufig weisen diese Bauteile zwei- oder dreidimensionale Krümmungen oder sich entlang der Ausdehnung der Bauteile ändernde Dicken auf.

Bei dem Schaumwerkstoff kann es sich beispielsweise um einen PMI-Hartschaumstoff handeln. Es können jedoch auch andere Schaumstoffe verwendet werden, die beispielsweise aus Polyvinylchlorid oder Polyurethan bestehen.

Ein weiterer Aspekt der Erfindung betrifft eine Vielnadelmaschine zur Herstellung verstärkter Schaumstoffe, verstärkter Textilien oder Kombinationen hiervon, welche mehrere oben und im Folgenden beschriebene Wiederholungseinheiten aufweist, die an einer gemeinsamen Achse in einem Abstand zueinander angebracht sind.

Die Zuführung des textilen Halbzeugs (Rovingzuführung) kann für jede Wiederholungseinheit einzeln oder für mehrere Wiederholungseinheiten gemeinsam vorgesehen sein.

Mit anderen Worten können mehrere Rovingzuführungen vorgesehen sein, wobei jede davon eine oder mehrere Wiederholungseinheiten bedient.

Ein weiterer Aspekt der Erfindung betrifft die Verwendung einer derartigen Vielnadelmaschine zur Herstellung verstärkter Schaumstoffe, zur Herstellung eines Strukturbauteils für ein Fahrzeug und zur Herstellung eines Flügels eines Windkraftwerks.

Ein weiterer Aspekt der Erfindung betrifft ein Verfahren zur Herstellung verstärkter Schaumstoffe, verstärkter Textilien oder Kombinationen hiervon, bei dem zunächst ein textiles Halbzeug entlang einer gerade verlaufenden Bahn im Bereich einer rückseitigen Oberfläche eines zu verstärkenden Materials angeordnet wird. Daraufhin erfolgt ein Verschieben des textilen Halbzeugs, so dass es danach entlang einer periodisch verlaufenden, ungeraden Bahn im Bereich der rückseitigen Oberfläche des zu verstärkenden Materials zu liegen kommt. Das Verschieben erfolgt durch zumindest einen Schieber und zumindest einen Pin, wobei der Schieber oder zumindest der eine Pin entlang einer Kreisbahn und vorbei an dem zumindest einen Pin bzw. dem Schieber belegt wird.

Vor oder nach dem Vorlegen des textilen Halbzeugs entlang der ungeraden Bahn wird eine Mehrzahl von Nadeln durch das zu verstärkende Material hindurchgeführt, so dass die einzelnen Nadeln die rückseitige Oberfläche des Materials durchdringen. Nachdem dann das textile Halbzeug in die einzelnen Nadeln eingelegt ist, ziehen die Nadeln jeweils einen Abschnitt des textilen Halbzeugs durch jeweils eine der Nadeln in das Material hinein, indem die Nadeln aus dem Material herausgezogen werden.

Wichtig ist hierbei, dass das textile Halbzeug in hinreichender Menge vorgelegt wurde, da es daraufhin von jeder einzelnen Nadel abschnittsweise durch das entsprechende Loch gezogen wird, so dass es das Loch ausfüllt.

Unterschiedliche Dicken des zu verstärkenden Materials können ausgeglichen werden, indem der Drehwinkel der in diesem Bereich arbeitenden Wiederholungseinheit entsprechend eingestellt wird. Ein großer Drehwinkel entspricht einer großen Vorlagelänge des textilen Halbzeugs in diesem Bereich und ein kleinerer Drehwinkel entspricht einer kleineren Länge. Ist das Material in einem bestimmten Bereich also relativ dick, wird der Drehwinkel der ersten und/oder zweiten Vorrichtung der entsprechenden Wiederholungseinheit entsprechend groß eingestellt.

Hieraus ergibt sich dann keine im engeren Sinn periodisch verlaufende, ungerade Bahn des textilen Halbzeugs, wenn es vorgelegt wird, sondern ein zickzack-, wellen-, trapezförmiges oder anderweitig hin- und herlaufendes Muster mit unterschiedlich hoher "Amplitude" (also unterschiedlicher Auslenkung zur ursprünglichen Haupterstreckungsrichtung des textilen Halbzeugs, die parallel zur Rotationsachse 12 führt).

Es handelt sich beispielsweise um ein knüpfendes Verfahren und nicht um ein Nähverfahren, bei dem das textile Halbzeug zunächst ausschließlich auf der rückseitigen Oberfläche des zu verstärkenden Materials vorliegt, nicht jedoch auf der Vorderseite. Da die Nadeln gleichzeitig bewegt werden, erhöht sich die Produktionsgeschwindigkeit erheblich.

Gemäß einer weiteren Ausführungsform der Erfindung weist die Wiederholungseinheit ein zylinderförmiges Gehäuse auf, in welchem die erste Vorrichtung und die zweite Vorrichtung angeordnet sind.

Gemäß einer weiteren Ausführungsform der Erfindung ist die erste Vorrichtung in Form eines zylinderförmigen Gehäuses ausgeführt, in welchem die zweite Vorrichtung angeordnet ist. In diesem Fall ist also kein gesondertes, beide Vorrichtungen aufnehmendes Gehäuse vorgesehen.

Gemäß einer weiteren Ausführungsform der Erfindung sind an der zweiten Vorrichtung zwei Pins parallel zueinander und in radialer Richtung zur Achse angebracht. Die Rotation der zweiten Vorrichtung in Bezug auf die erste Vorrichtung bewirkt eine Bewegung der Pins, welche die Pins auf entgegengesetzten Seiten vorbei an dem Schieber führt. Diese Bewegung erfolgt entlang einer Kreisbahn.

Alternativ oder zusätzlich kann die erste Vorrichtung um die Achse rotiert werden, jedoch in entgegengesetzte Richtung.

Gemäß einer weiteren Ausführungsform der Erfindung weist die Wiederholungseinheit eine erste Linearführung auf, welche zur linearen Führung des Schiebers in radialer Richtung zur Achse ausgeführt ist. Auf diese Weise ist es möglich, dass der Schieber nach Ausbildung des periodischen Musters des vorgelegten textilen Halbzeugs nach unten in Richtung der Achse geschoben wird und somit das textile Halbzeug an die entsprechende Nadel übergibt.

Gemäß einer weiteren Ausführungsform der Erfindung weist die Wiederholungseinheit eine zweite Linearführung ("Rovingzuführung") auf, welche durch die erste Vorrichtung und die zweite Vorrichtung parallel zu der Achse führt und einen Schlitten aufweist, welcher zum Vorlegen des textilen Halbzeugs zwischen dem Schieber und dem ersten Pin entlang einer gerade verlaufenden Bahn ausgeführt ist.

Es sei darauf hingewiesen, dass die hier und im Folgenden beschriebenen Merkmale der Wiederholungseinheit alle oder auch nur einige Wiederholungseinheiten der Vielnadelmaschine betreffen können.

Die Vielnadelmaschine weist gemäß einer weiteren Ausführungsform der Erfindung einen Nadelbalken auf, der eine Mehrzahl von Nadeln trägt und im Bereich der vorderseitigen Oberfläche des zu verstärkenden Materials angeordnet ist. Die Vielnadelmaschine ist zur Aufnahme des zu verstärkenden Materials zwischen dem Nadelbalken und den Wiederholungseinheiten ausgeführt.

Gemäß einer weiteren Ausführungsform der Erfindung sind die Abstände zwischen benachbarten Wiederholungseinheiten veränderbar, je nach gewünschtem Stichmuster.

Gemäß einer weiteren Ausführungsform der Erfindung ist zumindest die erste Vorrichtung oder die zweite Vorrichtung einer oder mehrerer oder gar aller Wiederholungseinheiten um einen vorgebbaren, änderbaren, individuellen Winkel rotierbar. Dieser Rotationswinkel kann insbesondere in Abhängigkeit der im Wirkungsbereich der Wiederholungseinheit vorherrschenden Dicke des zu verstärkenden Materials eingestellt werden. Es kann vorgesehen sein, dass die Vielnadelmaschine die Dicke des zu verstärkenden Materials selber bestimmt und entsprechend die maximalen Rotationswinkel der Wiederholungseinheiten einstellt.

Eine große Dicke würde in diesem Fall zu einem großen Rotationswinkel führen und eine geringe Dicke zu einem geringen Rotationswinkel.

Im Folgenden werden mit Verweis auf die Figuren Ausführungsbeispiele der Erfindung beschrieben.

### Kurze Beschreibung der Figuren

Fig. 1 zeigt eine Wiederholungseinheit für eine Vorlagevorrichtung einer Vielnadelmaschine gemäß einem Ausführungsbeispiel der Erfindung.
Fig. 2 zeigt einen Teilausschnitt der Wiederholungseinheit der Fig. 1 mit einer darin eingeführten Nadel.
Fig. 3 zeigt die serielle Anordnung mehrerer Wiederholungseinheiten einer Vielnadelmaschine gemäß einem Ausführungsbeispiel der Erfindung.
Fig. 4 zeigt drei Bauteile, welche mit der Vielnadelmaschine gemäß einem Ausführungsbeispiel der Erfindung hergestellt sind.
Fig. 5 zeigt ein Flussdiagramm eines Verfahrens gemäß einem Ausführungsbeispiel der Erfindung.

### Detaillierte Beschreibung von Ausführungsbeispielen

Die Darstellungen in den Figuren sind schematisch und nicht maßstäblich.

Werden in der folgenden Figurenbeschreibung in verschiedenen Figuren die gleichen Bezugszeichen verwendet, so bezeichnen diese gleiche oder ähnliche Elemente. Gleiche oder ähnliche Elemente können aber auch durch unterschiedliche Bezugszeichen bezeichnet sein.

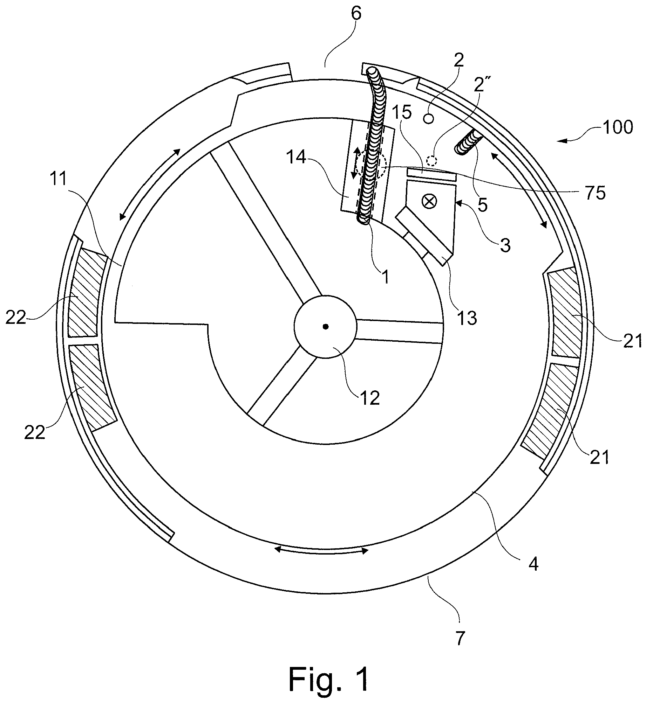

Fig. 1 zeigt eine Wiederholungseinheit 100 für eine Vorlagevorrichtung einer Vielnadelmaschine zum Anordnen eines textilen Halbzeugs 2 entlang einer periodisch verlaufenden, beispielsweise wellenförmigen, trapezförmigen, zickzackförmigen oder anderweitig ungerade verlaufenden Bahn, die in Bezug auf ihrer Haupterstreckungsrichtung abwechselnd positive und negative Steigung aufweist.

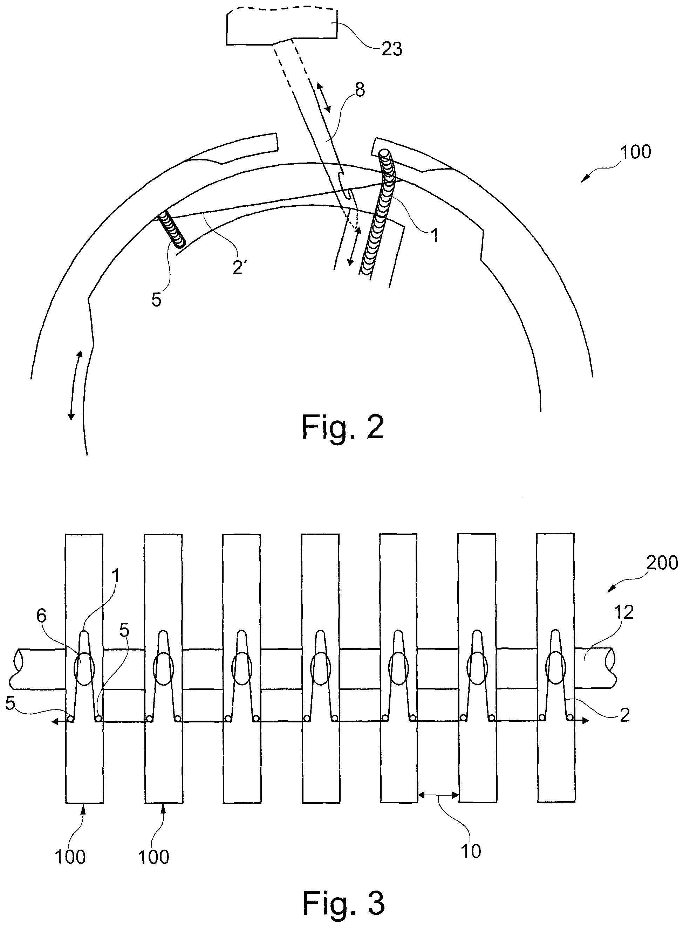

Die Wiederholungseinheit 100 ist zum Einbau in eine Vorlagevorrichtung einer Vielnadelmaschine 200 (vgl. Fig. 3) vorgesehen und ist an einer Achse 12 der Vielnadelmaschine anbringbar ausgeführt.

Mithilfe dieser Wiederholungseinheit kann das gewünschte periodische oder zumindest auf und ab (bzw. hin und her) laufende Muster des textilen Halbzeugs erzeugt werden. Beispielsweise ist die Wiederholungseinheit zylinderförmig ausgeführt. Daneben ist aber auch eine Ebene oder eine andere räumliche Ausgestaltung möglich.

Ein Grund für die zylindrische Formwahl liegt in der dadurch ermöglichten Verarbeitung von zylinderförmigen Vorformen (Preforms). Diese können sowohl als Kernverbund als auch als reine textile Vorformen ausgeführt sein. Die zylindrische Wahl vereinfacht aber auch die Bearbeitung und/oder Herstellung von einfach gekrümmten, armierten Bauteilen. Dies ist vorteilhaft, da der Großteil geometrisch auftretender Formen oft nur eine eindimensionale Krümmung aufweist oder aus Segmenten besteht, die sich auf Körper mit einfacher Krümmung zurückführen lassen.

Jede Wiederholungseinheit baut sich aus folgenden Elementen und Funktionen auf:

Von außen nach innen gesehen ist zunächst ein vollständiger Zylinder 7 vorgesehen, der an der Oberseite eine Aussparung 6 für ein Stichloch aufweist. An dessen Innenseite sind, wie in Fig. 1 exemplarisch gezeigt, gekrümmte Führungselemente 21, 22 angebracht. Zur optimalen Lagerung sind diese Führungselemente um 180 Grad zueinander und um 90 Grad zur Aussparung 6 des Stichlochs versetzt. Der Abstand zum Stichloch ist erforderlich, da sonst die Schlaufenbildung und das Einhängen der Schlaufe in die Nadel behindert werden könnte.

Auf dem beschriebenen Führungssystem 21, 22 ist ein (beispielhaft) geometrisch modifizierter Zylinder 4 montiert. An diesem Zylinder ist/sind "hängend" ein bzw. zwei Pin(s) 5 montiert, der/die durch die bewegliche Lagerung des Zylinders 4 eine Bewegung auf einer Kreisbahn beschreiben kann/können. Der Zylinder 4 wird im Rahmen der Anmeldung auch als "zweite Vorrichtung" bezeichnet.

Im oberen Segment ist der bewegliche Zylinder 4 geschlitzt, so dass ein beweglicher Schieber 1 durch ihn geführt und durch lineare Bewegung in eine Vertiefung in den Gehäusezylinder 7 geschoben werden kann. Der Schieber 1 ist auf einem statisch gelagerten oder ebenfalls rotierbaren, geometrisch modifizierten Zylinder ("erste Vorrichtung") 11 montiert. Zur Ermöglichung der Bewegung des Schiebers 1 in Richtung der Rotationsachse 12 ist eine erste Linearführung 14 vorgesehen, welche den Schieber 1 linear in radialer Richtung führt.

Seitlich neben dem Schieber 1 ist ein Vorlagemechanismus 3 montiert, der eine zweite Linearführung 13 aufweist, die durch alle Scheibensegmente (erste und zweite Vorrichtung 11, 4 und ggf. das Gehäuse 7) führt. Ein Schlitten 15 auf dieser Führung 13 legt das textile Halbzeug 2 zwischen den Schieber 1 und den/der Pin(s) 5 entlang einer gerade verlaufenden Bahn vor.

In einer alternativen Ausführungsform kann vorgesehen sein, dass das textile Halbzeug zunächst in geringerem Abstand zur Achse 12 vorgelegt wird, wie dies durch den gestrichelten Kreis 2" angedeutet ist. Auf diese Weise ist es möglich, dass zwei Prozesse gleichzeitig stattfinden können: Zum einen das (lineare) Vorlegen eines ersten Strangs textilen Halbzeugs im Bereich 2" und gleichzeitig das Verschieben eines zweiten Strangs textilen Halbzeugs 2 durch Rotation der ersten Vorrichtung und/oder der zweiten Vorrichtung.

Haben die Nadeln das textile Halbzeug dann durch die Löcher nach oben durch den zu verstärkenden Werkstoff hindurchgezogen, kann das textile Halbzeug 2" radial nach außen in den Bereich des Stichlochs geführt werden. Hierfür kann ein Hubmechanismus vorgesehen sein, der in den Vorlagemechanismus 3 integriert ist.

Der Vorlagemechanismus 3 kann auch zur Bereitstellung eines individuellen textilen Halbzeugs für jede einzelne Wiederholungseinheit ausgeführt sein. Somit kann vorgesehen sein, dass jede einzelne Wiederholungseinheit oder jede Gruppe von Wiederholungseinheiten einen eigenen Faden, eine eigene Faser oder einen eigenen Roving vorgelegt bekommt.

Die Wiederholungseinheiten 100 weisen somit verschiedene, ineinander angeordnete Zylinder, Zylindersegmente oder anderweitig geformte, konzentrisch angeordnete Elemente 7, 4, 11 auf. Insgesamt kann die Wiederholungseinheit scheibenförmig aufgebaut sein.

Die Anzahl der möglichen parallel auszuführenden Stiche wird durch die Anzahl der auf der Achse 12 angeordneten Wiederholungseinheiten bestimmt.

Insbesondere kann vorgesehen sein, dass beide Vorrichtungen einer Wiederholungseinheit um eine gemeinsame Drehachse 12 rotierbar gelagert sind. Auch kann vorgesehen sein, dass beide Vorrichtungen um jeweils eine eigene Drehachse 12, 75 rotierbar gelagert sind, wobei die beiden Drehachsen im Wesentlichen parallel zueinander ausgerichtet sind. Dies ist im Ausführungsbeispiel der Fig. 1 gezeigt. Hier ist der Schieber 1 rotierbar um die zur Achse 12 parallel angeordnete Achse 75 gelagert, die sich beipielsweise auf 60 % bis 70 % des Radius der Wiederholungseinheit 100 befindet.

Wie in Fig. 2 zu erkennen ist, ist der Schieber 1 in seinem oberen Bereich gekrümmt ausgeführt. Dies erleichtert das Abrutschen des textilen Halbzeugs 2', wenn der Schieber in radialer Richtung nach unten geschoben wird, so dass das textile Halbzeug 2' von der Nadel 8 aufgenommen werden kann.

Die beschriebenen Wiederholungseinheiten sind so gelagert, dass der Abstand zwischen ihnen flexibel gestaltet werden kann. Da jeder Wiederholungseinheit eine Nadel zugeordnet ist und damit ein Stich, bestimmt der Scheibenabstand 10 (vgl. Fig. 3) den (minimalen) Stichabstand.

Durch einen seitlichen Versatz und somit eine Verringerung des Abstands zwischen benachbarten Wiederholungseinheiten kann ein kleinerer Stichabstand ermöglicht werden. Durch einen seitlichen Versatz einer oder mehrerer Wiederholungseinheiten in der Reihe kann aber auch ein kleinerer Stichabstand generiert werden, als es zunächst geometrisch minimal möglich ist.

Hat die Klemmvorrichtung auf dem Schlitten das textile Halbzeug geklemmt, kann es durch die seriell angeordneten Wiederholungseinheiten vom Schlitten gezogen werden. Sind der Textilvorlagepunkt und der Endpunkt flexibel positionierbar, können auch weniger Stiche durchgeführt werden als es die Gesamteinheit maximal ermöglichen würde.

Das Funktionsprinzip hinter den bereits beschriebenen Bauteilen ist Folgendes: Ist das textile Halbzeug 2 zwischen des Pins 5 und dem Schieber 1 vorgelegt, kann sich der Zylinder, an dem die Pins 5 angebracht sind, drehen. In dem Moment, in dem die Pins auf ihrer Kreisbahn den Schieber passieren, beginnt sich das "Zick-Zack-Muster" aufzuspannen (siehe Fig. 3). Je größer die gefahrene Strecke (also der Rotationswinkel der entsprechenden Vorrichtung 11, 4) ist, umso länger ist das vorgelegte textile Halbzeug 2' (vgl. Fig. 2).

Zu beachten ist dabei, dass sich durch einzelnes oder segmentiertes Verfahren der Pins die erzeugte Spannung auf das textile Halbzeug und die Pins kontrollieren lässt. Dies kann sinnvoll und vorteilhaft sein, da gerade bei einer großen Anzahl von Wiederholungseinheiten 100 die Spannung auf das textile Halbzeug groß werden kann.

Wird die Bewegungsstrecke, also der Rotationswinkel, der entsprechenden Vorrichtung jeder Scheibeneinheit einzeln angesteuert, kann neben einem gleichförmigen Trapezmuster auch ein ungleiches Muster erzeugt werden. Dadurch können Dickensprünge im zu verstärkenden Material kompensiert werden. Können zusätzlich einzelne Wiederholungseinheiten von der Bewegung ausgenommen werden, lassen sich trotz Vielnadelansatz auch armierungsfreie Bereiche realisieren.

Auch kann vorgesehen sein, dass zwei, drei oder mehr Gruppen von Wiederholungseinheiten auf der Achse 12 angeordnet sind, die beispielsweise um jeweils 180 Grad (im Fall von zwei Gruppen) oder 120 Grad (im Fall von drei Gruppen), etc., zueinander um die Achse 12 verdreht sind. Auf diese Weise ist es möglich, dass die Vielnadelmaschine gleichzeitig zwei, drei oder mehr Bereiche des zu verstärkenden Materials bearbeitet. Dies ist insbesondere dann möglich, wenn das zu verstärkende Material eine Biegung aufweist oder gar als Zylinder ausgeführt ist, in dem sich die Wiederholungseinheiten befinden.

Die notwendige Länge des vorzulegenden textilen Halbzeugs ist von der Dicke des zu verstärkenden Materials und dem Stichwinkel, unter dem die Nadeln durch das zu verstärkende Material hindurchstechen, abhängig. Ist die Nadel 8 durch das zu verstärkende Material gestochen und ist die Nadelspitze im Stichloch in Position (vgl. Fig. 2), kann der Schieber 1 nach unten wegfahren. Dabei rutscht das textile Halbzeug vom Schieber 1 auf die Nadel 8. Um die Spannung des textilen Halbzeugs zu halten, kann der Zylinder 4 eine zusätzliche Bewegung entgegen dem Uhrzeigersinn machen. Nach Anlegen/Einlegen des textilen Halbzeugs an/in die Nadel kann sich die Nadel durch das zu verstärkende Material zurückziehen und das textile Halbzeug in das zu verstärkende Material einbringen.

Nachdem die Nadeln in das zu verstärkende Material zurückgezogen worden sind, fahren die Pins/Schieber wieder auf die Ausgangsposition zurück, so dass erneut textiles Halbzeug vorgelegt werden kann. Je nach räumlicher und geometrischer Gestaltung der Textilvorlage kann bereits nach Verfahren des Schiebers ein neues textiles Halbzeug unterhalb vorgelegt werden, welches dann zum richtigen Zeitpunkt zwischen Schieber und Pins gehoben wird (vgl. Bezugszeichen 2" der Fig. 1).

Wird das Textil zwischen zwei Wiederholungseinheiten geschnitten, entstehen singuläre, unabhängige Armierungen. Entfällt das Schneiden, wird auf der Unterseite des durchstochenen zu verstärkenden Materials eine Naht gebildet, da die Löcher miteinander verbunden sind.

Unterbleibt auch an der Oberseite das Schneiden und zieht der Nadelbalken 22 die Schlaufen einer Reihe durch die Schlaufen der Vorgängerreihe (diese werden dadurch fixiert), ist das realisierte Nahtbild mit dem Einseitenkettenstich verwandt. Der Unterschied ist hierbei, dass das Textil von unten kommt und nicht durch die Nadel von oben, und dass die Naht auf der Unterseite (bestimmt durch die Textilvorlage) unter Umständen kleiner gleich 90 Grad zur Naht auf der Oberseite (bestimmt durch den Reihenversatz) verdreht ist.

Der beschriebene Aufbau der Wiederholungseinheiten und der Ablauf der Vorlage des textilen Halbzeugs ist exemplarisch. Die Reihung der Wiederholungseinheiten und deren Funktionen können auch anders sein. Beispielsweise kann vorgesehen sein, dass sich nicht die zweite Vorrichtung, sondern die erste Vorrichtung rotieren lässt oder dass beide Vorrichtungen entgegengesetzt zueinander rotiert werden. Sind zusätzlich die Nadelstangen 8, die am Nadelbalken angebracht sind, axial drehbar, können mit einer unteren Einheit 100 nach dem oben beschriebenen Prinzip in der Basiskonfiguration 180 Grad der notwendigen Pinorientierungen (von insgesamt 360 Grad) realisiert werden. Durch Spiegelung des Aufbaus und des Ablaufs können die fehlenden 180 Grad erreicht werden.

Generell sind Doppelfunktionen möglich, die dann die vollen 360 Grad abdecken können (siehe weiter unten alternativen Gestaltung B).

In einer ersten alternativen Gestaltung A hat der innerste Zylinder (zweite Vorrichtung 4) die Aufgabe, durch rotatorische Bewegungen das Trapezmuster aufzuspannen. Das Gegenstück dazu ist eine Zylinderebene weiter außen montiert (zweite Vorrichtung 11). Vor dem Verfahren des Innenzylinders wird das textile Halbzeug zwischen den Pins beider Zylinderebenen vorgelegt. Fahren dann die Pins des inneren Zylinders zwischen denen des äußeren Zylinders durch oder umgekehrt, so spannt sich das gewünschte Muster auf. Beide Zylinder können zum Einlegen des textilen Halbzeugs in die Nadel, nach deren Durchstich, synchron verfahren, so dass das textile Halbzeug nicht mehr von Pins (bzw. dem bzw. den Schieber/n) des äußeren Zylinders, sondern von der Nadel 8 aufgespannt wird.

In der alternativen Gestaltung B wird die Bildung von Armierungen mit gegenläufiger Orientierung mit einer Einheit ermöglicht. Der Außenzylinder mit Stichloch bleibt dabei wie in allen anderen Varianten identisch. Die innen gelagerten Zylinder (erste und zweite Vorrichtung 11, 4) weisen jedoch zwei Fadenspannvorrichtungen auf, die um 180 Grad zueinander versetzt sind und ein spiegelsymmetrisches Zick-Zick-Muster aufspannen können. Der Fadenabzug ist unterhalb des Stichlochs angeordnet. Das Textil wird auf der Unterseite des Zylinders vorgelegt. Das Aufnehmen des Textils und das Vorlegen können parallel erfolgen. Zusätzlich muss die Textilvorlage nicht zwangsläufig im Zylinderinneren liegen, sondern kann auch außerhalb unterhalb des Zylinders positioniert sein, wenn es die geometrische Ausführung der Bauteile erlaubt. Durch Verfahren des aufgespannten Textils im Uhrzeigersinn und gegen den Uhrzeigersinn kann das Textil in die Nadeln (mit gegenläufiger Stichorientierung) eingelegt werden.

Somit ist es möglich, dass innerhalb einer Wiederholungseinheit zwei Stiche in unterschiedliche Richtungen (beispielsweise um 180 Grad zueinander) durchgeführt werden.

Wie in Fig. 3 zu sehen, weisen die Wiederholungseinheiten 100, die auf der Achse 12 angeordnet sind, einen konstanten Abstand zueinander auf. Es kann vorgesehen sein, dass einige oder jede dieser Wiederholungseinheiten in axialer Richtung in Bezug auf die daneben liegenden Wiederholungseinheiten verschoben werden können, um deren gegenseitigen Abstand zu variieren. Jede der Wiederholungseinheiten weist zwei Pins 5 und einen Schieber 1 auf, die aufgrund der rotatorischen Bewegung der zweiten Vorrichtung 4 und/oder der ersten Vorrichtung 11 aufeinander zu und aneinander vorbei bewegt werden können, so dass, wie in Fig. 3 zu sehen, das textile Halbzeug 2 in einer zickzackartigen Form aufgespannt werden kann.

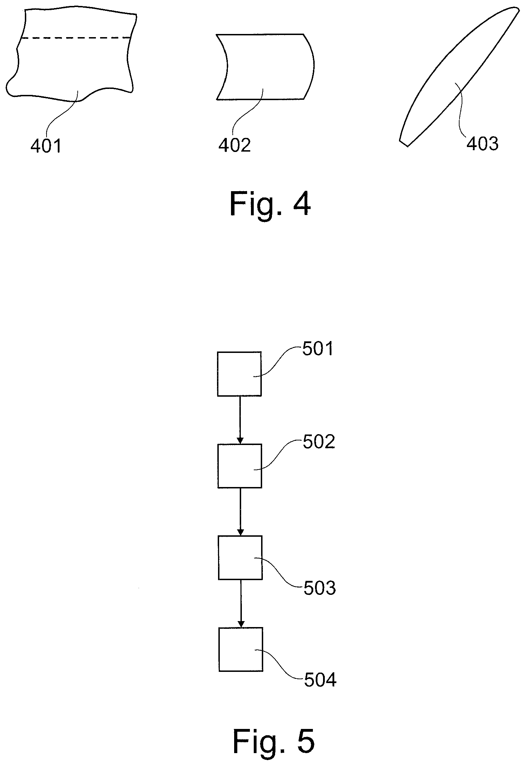

Fig. 4 zeigt drei Bauteile, die mit der beschriebenen Vielnadelmaschine hergestellt werden können. Bei Bauteil 401 handelt es sich um einen verstärkten Schaumstoff, bei Bauteil 402 um ein Strukturbauteil für ein Fahrzeug, beispielsweise ein Luftfahrzeug oder Wasserfahrzeug, und bei Bauteil 403 um den Flügel eines Windkraftwerks.

Fig. 5 zeigt ein Flussdiagramm eines Verfahrens gemäß einem Ausführungsbeispiel der Erfindung. In Schritt 501 wird ein textiles Halbzeug auf der Seite der rückseitigen Oberfläche des zu verstärkenden Materials entlang einer im Wesentlichen gerade oder nur unwesentlich gekrümmten Bahn vorgelegt. In Schritt 502 werden die Pins der Wiederholungseinheiten in Bezug auf die entsprechenden Schieber der Wiederholungseinheiten entlang einer Kreisbahn bewegt, so dass das textile Halbzeug durch die Pins und die Schieber aufgespannt wird. Auf diese Weise ergibt sich ein zickzack-, wellen- oder trapezförmiges Muster. In Schritt 503 nehmen die an einem Nadelbalken angebrachten Nadeln das textile Halbzeug innerhalb der Wiederholungseinheiten auf und fahren dann in Schritt 504 durch das zu verstärkende Material zurück und ziehen das textile Halbzeug in die Löcher hinein. Daraufhin kann eine Infiltration des zu verstärkenden Materials mit Harz erfolgen.

Ergänzend sei darauf hingewiesen, dass "umfassend" und "aufweisend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkungen anzusehen.

## Patentansprüche

1. Wiederholungseinheit (100) für eine Vorlagevorrichtung einer Vielnadelmaschine (200) zum Vorlegen eines textilen Halbzeugs (2) entlang einer gerade verlaufenden Bahn und zum anschließenden Verschieben des textilen Halbzeugs, so dass es danach entlang einer periodisch verlaufenden, ungeraden Bahn (13) im Bereich einer rückseitigen Oberfläche eines zu verstärkenden Materials zu liegen kommt, aufweisend:
eine erste Vorrichtung (11), an der ein Schieber (1) angebracht ist;
eine zweite Vorrichtung (4), an der zumindest ein Pin (5) angebracht ist;
wobei zumindest eine der beiden Vorrichtungen (11, 4) um eine Achse (12) rotierbar gelagert ist;
wobei eine Rotation der zumindest einen rotierbar gelagerten Vorrichtung (11, 4) eine Bewegung des Pins entlang einer Kreisbahn und vorbei an dem Schieber und/oder eine Bewegung des Schiebers entlang einer Kreisbahn und vorbei an dem Pin bewirkt.

2. Wiederholungseinheit (100) nach Anspruch 1, weiter auf weisend:
ein zylinderförmiges Gehäuse (7), in welchem die erste Vorrichtung (11) und die zweite Vorrichtung (4) angeordnet sind.

3. Wiederholungseinheit (100) nach Anspruch 1,
wobei die erste Vorrichtung (11) in Form eines zylinderförmigen Gehäuses ausgeführt ist, in welchem die zweite Vorrichtung (4) angeordnet ist.

4. Wiederholungseinheit (100) nach einem der vorhergehenden Ansprüche,
wobei an der zweiten Vorrichtung (4) zwei Pins (5) parallel zueinander und in radialer Richtung zur Achse angebracht sind;
wobei die Rotation der zweiten Vorrichtung in Bezug auf die erste Vorrichtung (11) eine Bewegung der Pins (5) bewirkt, welche die Pins auf entgegengesetzten Seiten vorbei an dem Schieber (1) führt.

5. Wiederholungseinheit (100) nach einem der vorhergehenden Ansprüche, weiter aufweisend:
eine erste Linearführung (14), welche zur linearen Führung des Schiebers (1) in radialer Richtung zur Achse (12) ausgeführt ist.

6. Wiederholungseinheit (100) nach einem der vorhergehenden Ansprüche, weiter aufweisend:
eine zweite Linearführung (13), welche durch die erste Vorrichtung (11) und die zweite Vorrichtung (4) parallel zu der Achse (12) führt und einen Schlitten (15) aufweist, welcher zum Vorlegen des textilen Halbzeugs zwischen dem Schieber (1) und dem zumindest einen Pin (5) ausgeführt ist.

7. Vielnadelmaschine (200) zur Herstellung verstärkter Schaumstoffe, verstärkter Textilien oder Kombinationen hiervon, aufweisend:
mehrere Wiederholungseinheiten (100) nach einem der Ansprüche 1 bis 6;
eine Achse (12), an welcher die Wiederholungseinheiten (100) in einem Abstand zueinander angebracht sind.

8. Vielnadelmaschine (200) nach Anspruch 7, weiter aufweisend:
einen Nadelbalken (23), der eine Mehrzahl von Nadeln (8) trägt;
wobei die Vielnadelmaschine zur Aufnahme des zu verstärkenden Materials zwischen dem Nadelbalken und den Wiederholungseinheiten (100) ausgeführt ist.

9. Vielnadelmaschine (200) nach Anspruch 7 oder 8,
wobei die Abstände zwischen benachbarten Wiederholungseinheiten (100) veränderbar sind.

10. Vielnadelmaschine (200) nach einem der Ansprüche 7 bis 9,
wobei zumindest die erste Vorrichtung (11) oder die zweite Vorrichtung (4) jeder Wiederholungseinheit (100) um einen individuellen, vorgebbaren Winkel um die Achse (12) rotierbar ist.

11. Verwendung einer Vielnadelmaschine (200) nach einem der Ansprüche 7 bis 10 zur Herstellung verstärkter Schaumstoffe, verstärkter Textilien oder Kombinationen hiervon.

12. Verwendung einer Vielnadelmaschine (200) nach einem der Ansprüche 7 bis 10 zur Herstellung eines Strukturbauteils für ein Fahrzeug.

13. Verwendung einer Vielnadelmaschine (200) nach einem der Ansprüche 7 bis 10 zur Herstellung eines Flügels eines Windkraftwerks.

14. Verfahren zur Herstellung verstärkter Schaumstoffe, verstärkter Textilien oder Kombinationen hiervon, wobei das Verfahren ausgeführt wird unter Verwendung einer Vielnadelmaschine nach einem der Ansprüche 7 bis 10 und die folgenden Schritte aufweist:
Anordnen eines textilen Halbzeugs (2) entlang einer gerade verlaufenden Bahn (13) im Bereich einer rückseitigen Oberfläche eines zu verstärkenden Materials;
Verschieben des textilen Halbzeugs (2), so dass es danach entlang einer periodisch verlaufenden, ungeraden Bahn (13) im Bereich der rückseitigen Oberfläche des zu verstärkenden Materials zu liegen kommt;
wobei das Verschieben durch einen Schieber (1) und zumindest ein Pin (5) erfolgt, wobei der Schieber beziehungsweise der zumindest eine Pin entlang einer Kreisbahn und vorbei an dem zumindest einen Pin beziehungsweise dem Schieber bewegt wird.

## Claims

1. Repeating unit (100) for a template device of a multi-needle machine (200) for offering up a semi-finished textile product (2) along a track which runs straight, and for subsequently displacing the semi-finished textile product such that the latter thereafter comes to lie along a track (13) which is not straight and runs in an intermittent manner in the region of a rear-side surface of a material to be reinforced, having
a first device (11) to which a slide (1) is attached; a second device (4) to which at least one pin (5) is attached;
wherein at least one of the two devices (11, 4) is mounted so as to be rotatable about an axle (12); wherein a rotation of the at least one rotatably mounted device (11, 4) causes a movement of the pin along a circular track and past the slide, and/or a movement of the slide along a circular track and past the pin.

2. Repeating unit (100) according to Claim 1, furthermore having:
a cylindrical housing (7) in which the first device (11) and the second device (4) are disposed.

3. Repeating unit (100) according to Claim 1,
wherein the first device (11) is embodied in the form of a cylindrical housing in which the second device (4) is disposed.

4. Repeating unit (100) according to one of the preceding claims,
wherein two pins (5) are attached to the second device (4) so as to be mutually parallel and in a radial direction in relation to the axle;
wherein the rotation of the second device in relation to the first device (11) causes a movement of the pins (5) which guides the pins on opposite sides past the slide (1).

5. Repeating unit (100) according to one of the preceding claims, furthermore having:
a first linear guide (14) which is embodied for guiding the slide (1) in a linear manner in a radial direction in relation to the axle (12).

6. Repeating unit (100) according to one of the preceding claims, furthermore having:
a second linear guide (13) which guides through the first device (11) and the second device (4) in a manner parallel with the axle (12), and has a slide (15) which is embodied for offering up the semi-finished textile product between the slide (1) and the at least one pin (5).

7. Multi-needle machine (200) for producing reinforced foam materials, reinforced textiles, or combinations thereof, having:
a plurality of repeating units (100) according to one of Claims 1 to 6;
an axle (12) to which the repeating units (100) are attached at a mutual spacing.

8. Multi-needle machine (200) according to Claim 7, furthermore having:
a needle bar (23) which supports a plurality of needles (8);
wherein the multi-needle machine is embodied for receiving the material to be reinforced between the needle bar and the repeating units (100).

9. Multi-needle machine (200) according to Claim 7 or 8,
wherein the spacings between neighbouring repeating units (100) are variable.

10. Multi-needle machine (200) according to one of Claims 7 to 9,
wherein at least the first device (11) or the second device (4) of each repeating unit (100) is rotatable by an individual, predefinable angle about the axle (12) .

11. Use of a multi-needle machine (200) according to one of Claims 7 to 10 for producing reinforced foam materials, reinforced textiles, or combinations thereof.

12. Use of a multi-needle machine (200) according to one of Claims 7 to 10 for producing a structural component for a vehicle.

13. Use of a multi-needle machine (200) according to one of Claims 7 to 10 for producing a blade of a wind power plant.

14. Method for producing reinforced foam materials, reinforced textiles, or combinations thereof, wherein the method is carried out while using a multi-needle machine according to one of Claims 7 to 10, and comprises the following steps:
disposing a semi-finished textile product (2) along a track (13) which runs straight in the region of a rear-side surface of a material to be reinforced;
displacing the semi-finished textile product (2) such that said semi-finished textile product (2) thereafter comes to lie along a track (13) which is not straight and runs in an intermittent manner in the region of a rear-side surface of the material to be reinforced;
wherein the displacing is performed by a slide (1) and at least one pin (5), wherein the slide, or the at least one pin, respectively, is moved along a circular track and past the at least one pin, or the slide, respectively.

## Revendications

1. Unité de répétition (100) pour un dispositif d'alimentation d'une machine multi-aiguilles (200) pour l'alimentation d'un produit semi-fini textile (2) le long d'une bande s'étendant en ligne droite et pour le déplacement subséquent du produit semi-fini textile de telle sorte qu'il vienne ensuite se placer le long d'une bande non droite s'étendant périodiquement (13) dans la région d'une surface arrière d'un matériau à renforcer, présentant :
un premier dispositif (11) sur lequel est monté un coulisseau (1) ;
un deuxième dispositif (4) sur lequel est montée au moins une broche (5) ;
au moins l'un des deux dispositifs (11, 4) étant supporté de manière à pouvoir tourner autour d'un axe (12) ;
une rotation de l'au moins un dispositif (11, 4) supporté de manière à pouvoir tourner entraînant un déplacement de la broche le long d'une trajectoire circulaire et devant le coulisseau et/ou un déplacement du coulisseau le long d'une trajectoire circulaire et devant la broche.

2. Unité de répétition (100) selon la revendication 1, présentant en outre :
un boîtier cylindrique (7) dans lequel sont disposés le premier dispositif (11) et le deuxième dispositif (4).

3. Unité de répétition (100) selon la revendication 1,
dans laquelle le premier dispositif (11) est réalisé sous la forme d'un boîtier cylindrique dans lequel est disposé le deuxième dispositif (4) .

4. Unité de répétition (100) selon l'une quelconque des revendications précédentes,
dans laquelle deux broches (5) sont montées parallèlement l'une à l'autre et dans une direction radiale par rapport à l'axe au niveau du deuxième dispositif (4) ;
la rotation du deuxième dispositif par rapport au premier dispositif (11) entraînant un déplacement des broches (5) qui guide les broches sur des côtés opposés devant le coulisseau (1).

5. Unité de répétition (100) selon l'une quelconque des revendications précédentes, présentant en outre :
un premier guide linéaire (14) qui est réalisé pour guider de manière linéaire le coulisseau (1) dans la direction radiale par rapport à l'axe (12).

6. Unité de répétition (100) selon l'une quelconque des revendications précédentes, présentant en outre :
un deuxième guide linéaire (13) qui guide à travers le premier dispositif (11) et le deuxième dispositif (4) parallèlement à l'axe (12) et qui présente un chariot (15) qui est réalisé pour alimenter le produit semi-fini textile entre le coulisseau (1) et l'au moins une broche (5).

7. Machine multi-aiguilles (200) pour la fabrication de mousses renforcées, de textiles renforcés de combinaisons de ceux-ci, présentant :
plusieurs unités de répétition (100) selon l'une quelconque des revendications 1 à 6 ;
un axe (12) au niveau duquel sont montées les unités de répétition (100) à distance les unes des autres.

8. Machine multi-aiguilles (200) selon la revendication 7, présentant en outre :
une barre d'aiguilles (23) qui porte une pluralité d'aiguilles (8) ;
la machine multi-aiguilles étant réalisée pour recevoir le matériau à renforcer entre la barre d'aiguilles et les unités de répétition (100).

9. Machine multi-aiguilles (200) selon la revendication 7 ou 8,
dans laquelle les distances entre des unités de répétition adjacentes (100) peuvent être modifiées.

10. Machine multi-aiguilles (200) selon l'une quelconque des revendications 7 à 9,
dans laquelle au moins le premier dispositif (11) ou le deuxième dispositif (4) de chaque unité de répétition (100) peut tourner autour de l'axe (12) suivant un angle individuel prédéfinissable.

11. Utilisation d'une machine multi-aiguilles (200) selon l'une quelconque des revendications 7 à 10 pour la fabrication de mousses renforcées, de textiles renforcés ou de combinaisons de ceux-ci.

12. Utilisation d'une machine multi-aiguilles (200) selon l'une quelconque des revendications 7 à 10 pour la fabrication d'un composant structurel pour un véhicule.

13. Utilisation d'une machine multi-aiguilles (200) selon l'une quelconque des revendications 7 à 10 pour la fabrication d'une aile d'éolienne.

14. Procédé de fabrication de mousses renforcées, de textiles renforcés ou de combinaisons de ceux-ci, le procédé étant mis en œuvre en utilisant une machine multi-aiguilles selon l'une quelconque des revendications 7 à 10 et présentant les étapes suivantes :
agencement d'un produit semi-fini textile (2) le long d'une trajectoire s'étendant en ligne droite (13) dans la région d'une surface arrière d'un matériau à renforcer ;
déplacement du produit semi-fini textile (2) de telle sorte qu'il vienne ensuite se placer le long d'une bande non droite s'étendant périodiquement (13) dans la région de la surface arrière du matériau à renforcer ;
le déplacement s'effectuant par un coulisseau (1) et au moins une broche (5), le coulisseau ou l'au moins une broche étant déplacé (e) le long d'une trajectoire circulaire et devant l'au moins une broche, respectivement le coulisseau.
